# EUROPEAN PATENT SPECIFICATION

(11) **EP 0 610 037 B1**
(45) Date of publication and mention of the grant of the patent: **11.08.1999**
(21) Application number: 94300651.0
(22) Date of filing: 28.01.1994
(51) Int. Cl.: A01K 87/02

(54) **A joint type fishing rod and method of manufacturing the same**
Angelrute mit Steckverbindung und Produktionsverfahren dafür
Canne à pêche à emboîtements et méthode de production de celle-ci

(30) Priority: 04.02.1993 JP 4041493; 26.08.1993 JP 23420293
(43) Date of publication of application: 10.08.1994
(73) Proprietor: DAIWA SEIKO INC., Higashikurume-shi, Tokyo (JP)
(72) Inventor: Usuta, Toshikazu, c/o Daiwa Seiko, Inc., Higashikurume-shi, Tokyo (JP); Ono, Hiroyuki, c/o Daiwa Seiko, Inc., Higashikurume-shi, Tokyo (JP)
(74) Representative: Jackson, Peter Arthur

(56) References cited:
- FR-A- 1 418 258
- GB-A- 1 130 106
- US-A- 1 871 985
- US-A- 3 519 295

## Description

The present invention relates to a joint type fishing rod formed of fiber reinforced prepreg and a method of manufacturing the same, and the present invention can also be applied to a joint type fishing rod for competition such as a bottom rod or the like necessary to reduce the required time for joining together a plurality of rod tubes.

As a conventional joint type fishing rod in which a plurality of rod tubes are joined together in use, there is disclosed, in GB-A-1130106, a fishing rod in which a male ferrule consisting of a component having a rounded leading end and a female ferrule for reception are mounted on the front and rear portions of the respective rod tubes, to thereby enable quick insertion of an insertion side joining cylindrical portion into a receive side joining cylindrical portion.

However, due to this construction wherein separate components, i.e. male and female ferrules are mounted to the rod tubes which are to be joined together, the joining cylindrical portion of a rod tube on the insertion side must be unavoidably made further narrower, which results in lowering the strength of that portion. In particular, a fishing rod including such rod tubes is easy to break in the mounting boundary where the above-mentioned components are mounted, and also the increased weight of the joined portions causes the increase of the entire weight of the fishing rod. Further, such construction deteriorates the design of the fishing rod in that the joined portions are bulky.

In view of the above-mentioned conventional circumstances, it is an object of the invention to provide a joint type fishing rod which allows a quick operation for joining together a plurality of rod tubes, is light in weight, is of high strength and has a good figure, and a method of manufacturing the same.

FR-A-1418258 discloses a joint type fishing rod made of several light metal tube rods in which a smaller overall diameter rod is inserted into the next larger overall diameter rod.

US-A-1871985 discloses a joint type fishing rod comprising, as a set, a plurality of rod tubes wherein at least one of the rod tubes is provided at its one end with an integral joining guide portion the diameter of which is gradually decreased relative to the rest of the at least one rod tube to facilitate and guide insertion into another rod tube; the joining guide portion being simultaneously moulded with the at least one rod tube.

According to the present invention, such a fishing rod is characterised in that each rod tube is formed by winding at least one prepreg formed of high-strength fibres impregnated with synthetic resins; each joining guide portion is formed of at least one integral plastic layer; the integral joining guide portion of at least one larger overall diameter rod tube is insertable into a receiving end of a smaller overall diameter rod tube; and is retained entirely by an interference fit between the two rod tubes.

Since the joining guide portion is formed integrally in the front end portion of the joining cylindrical portion of the insertion side rod tube in such a manner that the diameter of the guide portion is gradually reduced to a position closer to the central axis of the insertion side rod tube than the inner surface of the main body portion of the insertion side rod tube, the fishing rod allows the joining operation to be carried out quickly, is light in weight, is of high strength, and has a good figure.

According to a second aspect of the present invention a method of manufacturing a rod tube for use in a joint type fishing rod according to the first aspect of the present invention comprises the steps of providing a metal core having a diameter-reduced portion corresponding in location to the joint guide portion, and a main portion for forming the rest of the rod tube; and winding a prepreg around the metal core.

An ordinary heating and hardening treatment or the like may then be performed in the thus formed rod tube blank.

The method according to the second aspect of the present invention may further comprise having slits formed in the prepreg which are arranged to extend substantially axially along the metal core and the prepreg being wound in such a manner that the slits are substantially laid on the diameter-reduced portion.

The slits, which are formed in the prepreg and made to extend along the reduced diameter portion of the core metal, permit portions of the prepregs between the respective slits to be superimposed on each other. Thus, it is possible to form or mold a rod tube having an integral joining guide portion without any wrinkles.

The method according to the second aspect of the present invention may further comprise having the prepreg in the form of a narrow-width tape which is spirally wound around the diameter-reduced portion in such a manner that at least a part of the prepreg is located around the main portion.

The prepreg in the form of the narrow-width tape can be wound around the diameter gradually-reduced-portion of the core without any wrinkles. In case where at least part of such prepreg is superimposed or pillingly stuck on the prepreg forming the main body layer, it is possible to produce rod tubes which respectively include joining guide portions formed integrally therewith.

The method according to the second aspect of the present invention may further comprise having a chamfering supplemental layer provided on one of radially internal and external surfaces of the prepreg so as to substantially fill up a level difference between the main and diameter-reduced portions; combining the chamfering supplemental layer with the prepreg thus wound, to provide an integral part; and chamfering an end of the integral part to provide the joint guide portion.

The chamfering supplemental layer integral with the main body layer is formed of a supplement material, not limited to a prepreg, in such a manner as to have a thickness adequate to make up for a level difference between a small diameter portion and a main body portion, and be located on the outside or inside of the extension portion of a prepreg wound around the main body portion of a core metal. Such integral portion can be formed to a desired thickness according to the outside diameter of the small diameter portion of the core metal. For this reason, it is very easy to form a joining guide portion the diameter of which is gradually reduced to a sufficient extent by a chamfering process to a position closer to the central axis of the insertion side rod tube than the inner surface of the main body portion of the insertion side rod tube.

In the accompanying drawings:
Fig. 1 is an exploded side view of a joint type fishing rod according to the invention;
Fig. 2 is an enlarged section view of the joining portions of a rod tube S4 and a rod tube S5 respectively shown in Fig. 1;
Fig. 3 is an explanatory view of a first embodiment of a method of manufacturing a rod tube shown in Fig. 1 according to the invention;
Fig. 4 is an explanatory view of a second embodiment of a method of manufacturing a rod tube shown in Fig. 1 according to the invention;
Figs. 5A to 5C are explanatory views of a third embodiment of a method of manufacturing a rod tube shown in Fig. 1 according to the invention;
Figs. 6A and 6B are explanatory views of a modification of the manufacturing method shown in Fig. 5; and
Figs 7A to 7E are enlarged section view showing examplified modifications of the rod tube of the joint type fishing rod of the invention.

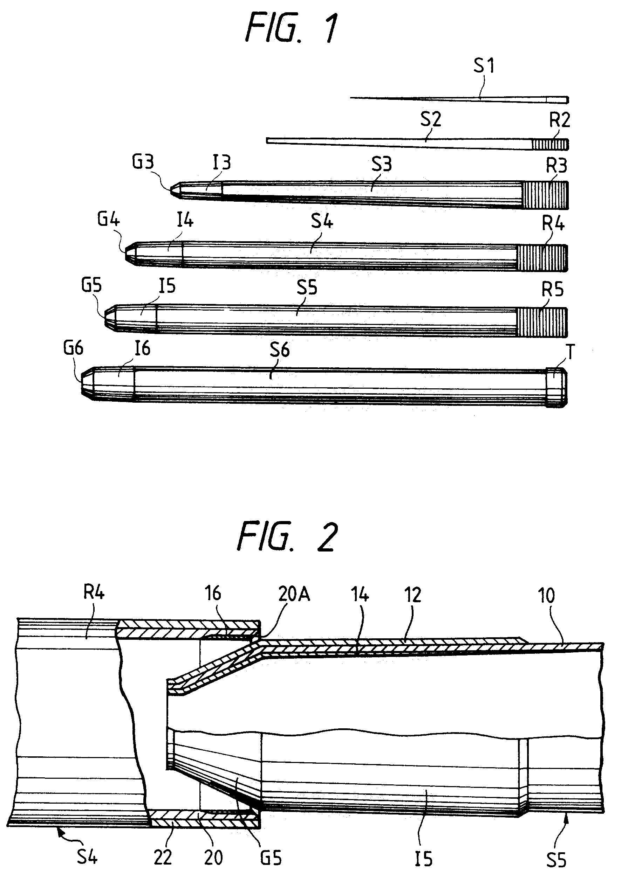

Fig. 1 is a side view of a joint type fishing rod when it is exploded, in which there are shown the components of the fishing rod, that is, a first rod tube S1, a second rod tube S2, a third rod tube S3, a fourth rod tube S4, a fifth rod tube S5, and a sixth rod tube S6. Among them, the first rod tube S1, serving as a spearhead of the fishing rod, and the second rod tube S2 are constructed as a shake-out or telescopic type, and the remaining rod tubes are of an inverted-sequence joint type, that is, they are structured in a system in which the latter rod tubes are inserted into the former rod tubes sequentially.

This is because the present fishing rod is structured as a so-called "bottom rod" which means a competition type fishing rod.

The third rod tube S3, fourth rod tube S4 and fifth rod tube S5 respectively include in the front end portions thereof insertion side joining cylindrical portions I3, I4 and I5 and further include in the leading end portions thereof joining guide portions G3, G4 and G5 with the diameters of which are gradually reduced toward the front ends thereof. On the other hand, these rod tubes respectively include in the rear end portions thereof receive side joining cylindrical portions R3, R4 and R5. Also, in the rear end portion of the second rod tube S2, there is provided a receive side joining cylindrical portion R2 which is used to receive the insertion side joining cylindrical portion I3 of the third rod tube S3. The sixth rod tube S6, serving as the base rod tube of the present fishing rod, includes an insertion side joining cylindrical portion I6 in the front end portion thereof and also includes a joining guide portion G6 in the front portion of the joining cylindrical portion I6. The sixth rod tube S6 includes a bottom tap T detachably mounted on the rear end portion thereof, through which the rod tubes S1, S2, S3, S4 and S5 can be stored into the sixth rod tube 6.

Additionally, each of the joining guide portions may also be formed into a curved surface shape such as a semi-spherical shape or the like, besides the tapered shape, as long as it has an outer shape which is sufficiently reduced in diameter continuously with the respective insertion side joining cylindrical portion.

Referring now to Fig. 2, there is shown an enlarged section view for explaining a joining process, wherein the fifth rod tubes S5 is joined to the fourth rod tube S4. The fifth rod tube S5 includes an insertion side joining cylindrical portion I5 in the leading end portion thereof and further includes a truncated-cone joining guide portion G5 in front of the cylindrical portion I5. The joining guide portion G5 is formed with the diameter thereof gradually reduced in such a manner that the reduced diameter leading end of the guide portion G5 is situated far closer to the central axis of the rod tube S5 than the virtual extension line of the inner surface of the portion of the main body layer 10, forming the main body portion of the rod tube S5 except the joining guide portion G5 and joining cylindrical portion I5. Thanks to this, even in case where the required time for joining the rod tubes must be reduced such as in a competition, the joining guide portion G5, that is, the rod tube S5 can be inserted quite easily into the fourth rod tube S4 disposed on the front side thereof.

Also, although it is difficult to see only from Fig. 2, the insertion side joining cylindrical porion I5 is slightly tapered forwardly, so that, when it is inserted into a receive side joining cylindrical porion R4 to be described later, they can be joined together tightly. In Fig. 1, such taper is drawn in an easily understandable manner. Additionally, the rest of the rod tube S5 may be tapered slightly.

The fifth rod tube S5 consists mainly of the main body layer 10 which is formed of fiber reinforced prepreg. Also, in the portion of the above-mentioned insertion side joining cylindrical portion I5, an inside reinforcing layer 14 and an outside reinforcing layer 12 respectively formed of other fiber reinforced prepreg than the prepreg used for the main body layer 10 are formed respectively inside and outside but integrally with the main body layer 10. The strength of the insertion side joining cylindrical portion I5 is retained in this manner. Preferably, the prepreg for forming each of the inside and outside reinforcing layers 14 and 12 contains the larger amount of reinforcing fibers arranged in the circumferential direction with respect to the rod tube than that of the longitudinally arranged reinforcing fibers, for reinforcement of the joining guide portion G5 against the abutment. The joining guide portion G5 disposed in front of the insertion side joining cylindrical portion I5 has a section structure which is a three-layer structure similar to that of the cylindrical portion I5. Description will be given later of a method of manufacturing such three-layer piling structure.

On the other hand, the fourth rod tube S4 comprises a main body layer 20, and a reinforcing layer 22 formed of fiber reinforced prepreg with the fibers thereof arranged in the circumferential direction is integrally wound around the outer peripheral portion of the rear portion of the main body layer 20. Also, around the inner peripheral portion of the rear portion of the main body layer 20, there is wound integrally a fraying preventive layer 16 having a narrow width which is formed of a thin woven cloth prepreg. Thus, there is formed a receive side joining cylindrical portion R4 which is reinforced by the above-mentioned reinforcing layer 22, whereby the inside diameter of the receive side joining cylindrical portion R4 is prevented from expanding when the insertion side joining cylindrical portion I5 of the fifth rod tube 5 is inserted into and joined together with the receive side joining cylindrical portion R4. Also, even if a tear happens to occur in the rear end portion of the rod tube S4, the presence of the woven cloth of the tear preventive layer 16 of the rod tube S4 can prevent the tear from progressing further. Further, the main body layer 20 includes a chamfering surface 20A in the edge portion of the inner periphery thereof, which facilitates the insertion of the fifth rod tube S5.

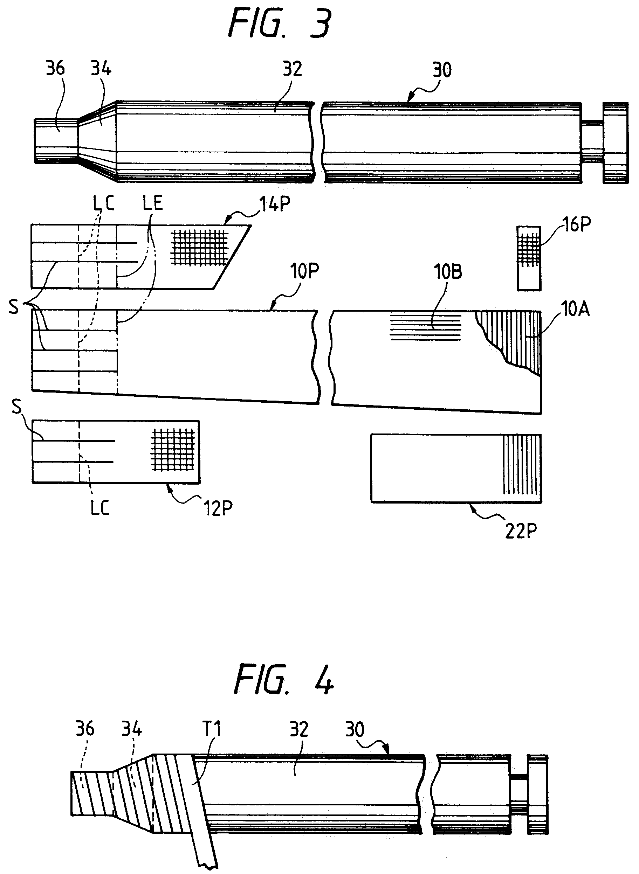

Next, description will be given below of a method of manufacturing a joint type fishing rod by way of a method of manufacturing the fifth rod tube with reference to Fig. 3.

At first, there is prepared a core metal 30 which includes a main body portion 32 for forming a main body layer 10, a truncated-conical portion 34 disposed in front of the main body portion 32 to serve as a reduced diameter portion with the diameter thereof gradually reduced, and a cylindrical portion 36 of a small diameter disposed in front of the truncated-conical portion 34.

With such a longitudinal position relation relative to the core metal 30 as shown in Fig. 3, a fiber reinforced prepreg 14P of a woven cloth for an inside reinforcing layer 14 is wound around the core metal 30, whereas a narrow-width sheet 16P of a thin prepreg including a woven cloth such as a glass fiber or the like impregnated with a synthetic resin is wound around the other end portion of the main body portion 32.

After then, there is wound around the above core metal 30 a fiber reinforcing prepreg 10P for the main body layer 10 which is a combination of an arranging sheet 10A the fibers of which are arranged in the circumferential direction of the core metal 30 and an arranging sheet 10B the fibers of which are arranged in the longitudinal direction thereof. Each of these arranging sheets 10A and 10B has a thickness of the order of 10 to 80 microns, and the whole of the fiber reinforced prepreg 10P has a thickness of the order of 100 to 200 microns.

After then, a fiber reinforced prepreg 12P formed of woven cloth for an outer side reinforcing layer 12 is wound round the core metal 30 with such a longitudinal position relation as shown in Fig. 3.

Also, in the upper side position of the rear portion of the main body layer 10, a fiber reinforced prepreg 22P the fibers of which are arranged in the peripheral or circumferential direction of the core metal 30 is wound on the fiber reinforced prepreg 10P.

Further, the number of windings of the above respective fiber reinforced prepregs can be selected arbitrarily.

Further, in Fig. 3, the fiber reinforced prepreg 10P for forming the main body layer 10 includes on the inner layer side thereof the arranging sheet 10A arranged in the circumferential direction of the core metal 30 and, on the outer side thereof, the arranging sheet 10B arranged in the longitudinal direction thereof. Alternatively, after the fiber reinforced prepreg 10P is wound around the core metal 30, there may be further wound around the metal core 30 a fiber reinforced prepreg which is a reversed version of the fiber reinforced prepreg 10P. That is, the latter fiber reinforced prepreg includes on the inner side thereof an arranging sheet arranged in the longitudinal direction of the core metal 30 and, on the outer side thereof, an arranging sheet arranged in the circumferential direction thereof. Therefore, in the main body layer 10 formed in this manner, the inner-most layer and outer-most layer thereof are both in such a state that the fibers thereof are arranged in the circumferential direction of the core metal 30, and the fiber of a layer between the inner-most and outer-most layers is arranged in the longitudinal direction of the core metal or the rod tube.

Each of the above-mentioned fiber reinforced prepregs 14P, 10P and 12P, as shown in Fig. 3, includes slits S which extend longitudinally in the portions thereof corresponding to the truncated-conical portion 34 and small-diameter cylindrical portion 36 of the core metal 30. Accordingly, although the truncated-conical portion of the core metal 30 is gradually decreased in diameter from the main body portion 32, the respective sheets of fiber reinforced prepregs are wound in such a manner that the prepregs between the respective slits are superimposed on one another because of the presence of the slits S, to thereby prevent generation of wrinkles in the prepregs. Also, generally, if the slits S of the inner side fiber reinforced prepreg 14P are formed longer than the other slits S, then the winding operation can be performed easily.

After the respective sheets of fiber reinforced prepregs are wound around the core metal 30 in this manner, they are tightened with a tightening tape. In this case, in taping the truncated-conical portion 34, the taping may be firstly started on the cylindrical portion 36 of a small diameter to make it stable to perform the taping operation, and thereafter, the truncated-conical portion 34 may be taped continuously and stably, and finally the taping may reach the main body portion 32. Here, the small-diameter cylindrical portion 36 of the core metal 30 is formed for the stable formation of the truncated-conical portion 34 in consideration of such taping process and the like. Also, the small-diameter cylindrical portion 36 can also be used as a portion to be cut (which will be described later).

After completion of the taping, the thus produced rod tube blank is heated and hardened according to an ordinary method, the tape is peeled off, the core metal 30 is removed, the rod tube blank is cut at a position LC shown by broken lines in Fig. 3, and the cut rod tube is further finished by polishing or the like.

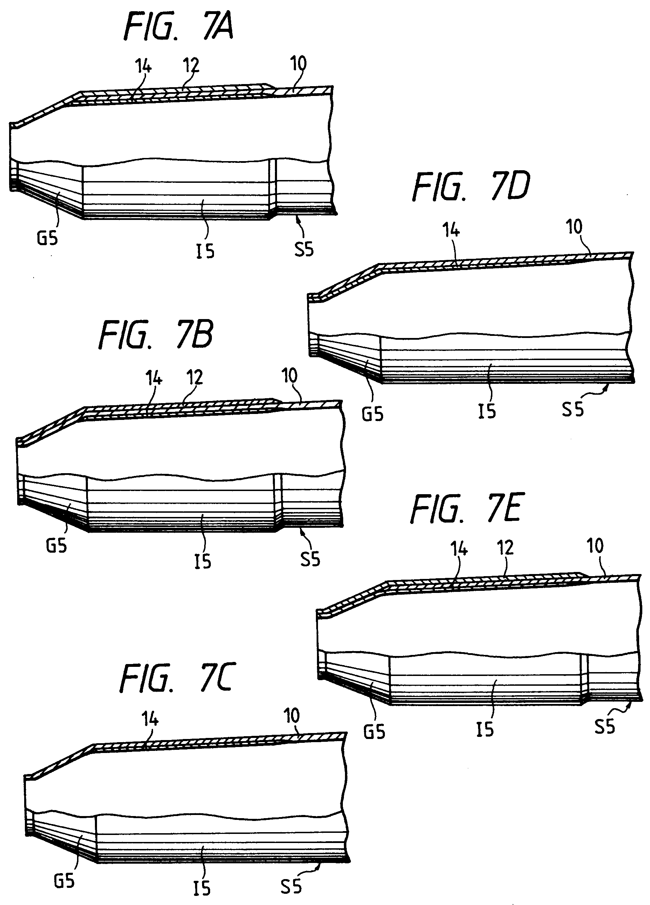

In the above-mentioned embodiment, the insertion side joining guide portion G5 is constructed by three layers, i.e. the main body layer 10, and the inner and outer reinforcing layers 12 and 14. Alternatively, only one of these three layers or a combination of only two of them may be employed, for instance, as shown in Figs 7A to 7E. In this case, the attention should be given so as not to produce, on the outermost side, a level difference or step which obstructs the smooth and quick insertion. For example, the outer side reinforcing layer 12 is laid to form the outer peripheral surface, with one or two of the prepregs for the layers 10 and 14 be cut at a position shown by two-dot chain lines LE in Fig. 3, to provide structures shown in Figs 7A, 7B and 7E. Alternatively, it is possible to dispense with the outer reinforcing layer 12 in order to form the rod tube of the present invention, wherein the main body layer 10 defines the smooth outer surface, as shown in Figs 7C and 7D.

Further, a metal ring may be fitted around the metal core 30 during the prepreg winding step before molding in such a manner that it is interposed and held between the main body 10 and one of the inner and outer reinforcing layers 12 and 14. In this case, the main ring is integrally embedded in the molded joining guide portion G5 for reinforcement.

The rod tubes S4 and S3 can be produced similarly to the rod tube S5. With regards to the rod tube S6, the rear portion thereof is different from that of the rod tube S5, but the insertion side leading end portion thereof can be formed similarly to the rod tube S5. Also, the rod tube S2 is different in the leading end portion thereof from the rod tube S5, but the rear portion thereof can be produced similarly to the rod tube S5.

Referring now to Fig. 4, there is shown a second method of producing the joining guide portion G5 with the diameter thereof gradually reduced, in which there is used a narrow-width tape T1 composed of a woven cloth prepreg similar in material to the fiber reinforced prepregs 12P and 14P for reinforcement shown in Fig. 3. That is, when the inner side reinforcing layer 14 is formed in the rod tube S5 and the like, similarly to the above-mentioned tightening tape, tape is firstly wound around the small diameter cylindrical portion 36 of the core metal 30, is next wound around the truncated-conical portion 34, and is finally wound round the main body portion 32.

Further, similarly to the embodiment shown in Fig. 3, the fiber reinforced prepreg 10P for the main body layer is wound around the tape-wound core metal 30 and finally, in a similar manner to the above-mentioned embodiment, a narrow-width tape is wound around from the small-diameter cylindrical portion for the outer side reinforcing layer 12. In this manner, the narrow-width tape T1 and the fiber reinforced prepreg for the main body layer are partly overlapped on each other to thereby form the insertion side joining cylindrical portion I5 in a reinforced state. In this case, the fiber reinforced prepreg for the main body layer, similarly to the embodiment shown in Fig. 3, may have such a length as to be able to form the joining guide portion G5 and include slits S in the portion of the guide portion G5, or alternatively, the prepreg may be arranged such that it is terminated at the position LE shown in Fig. 3 and thus it does not include any slits. In the latter case in which no slits are included, the joining guide portion G5 is formed by the inner and outer narrow-width tapes. Besides, other modifications are also possible. For example, the inner side reinforcing layer 14 may be omitted, the outer side reinforcing layer 12 may be employed, and thus the joining guide portion G5 may be formed only by the narrow-width tape that forms the outer side reinforcing layer 12.

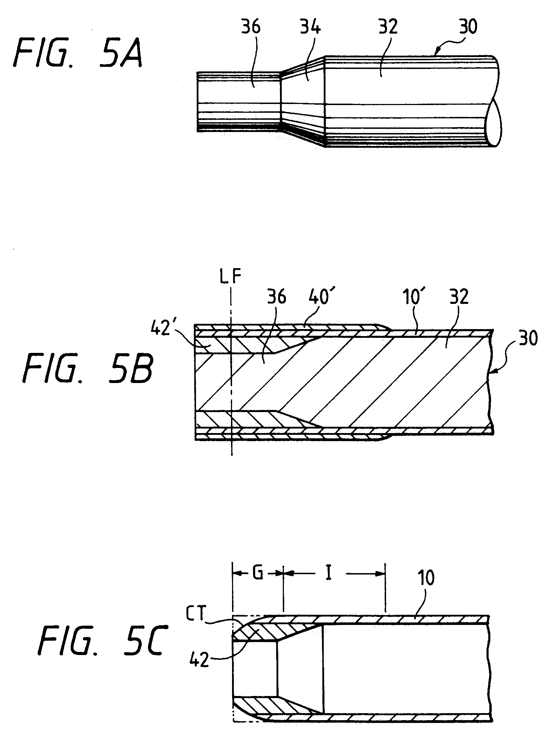

Next, description will be given below of a third embodiment of a method of manufacturing a joint type fishing rod according to the invention with reference to Fig. 5. At first, there is prepared a core metal 30 which includes a main body portion 32, a small-diameter cylindrical portion 36 with the diameter thereof reduced greatly relative to the main body portion 32, and a truncated-conical portion 34 connecting the main body portion 32 with the cylindrical portion 36 (see Fig. 5A).

After then, on the small-diameter cylindrical portion 36 and truncated-conical portion 34, there is formed a chamfering supplement layer 42' such that it has an outside diameter substantially equal to the outside diameter of the main body portion 32. The chamfering supplement layer 42' may be formed of the same prepreg as the prepreg used to form the main body layer 10 of the rod tube, other prepreg, hard synthetic resin or the like. Also, the thickness of the chamfering supplement layer 42', that is, a level difference between the main body portion 32 and the small-diameter cylindrical portion 36 may be preferably three times or more than the thickness of the main body layer 10 (which will be described later).

After the chamfering supplement layer 42' is formed in this manner, the prepreg used to form the main body layer is wound over both the outer peripheral portions of the main body portion 32 and the chamfering supplement layer 42', to thereby form a prepreg layer 10'. After then, on the front portion of the prepreg layer 10', there is formed a working width prepreg layer 40' to which a processing is to be subjected (described later) as shown in Fig. 5B. A tightening tape or the like is then wound around the thus formed rod tube blank, and the rod tube blank with the tightening tape wound therearound is heated to thereby turn the respective layers 10', 42' and 40' into an integral part. After the rod tube is cooled, the tightening tape and core metal 30 are removed from the rod tube blank.

After then, the leading end portion of the integral part, which portion is generally not uniform, are cut off along a line LF, and the working width prepreg layer 40' of the thus cut rod tube blank is ground by centerless working to obtain a given outside diameter with a desired accuracy to thereby form an insertion side joining cylindrical portion I. The leading end corner potions of the insertion side joining cylindrical portion I are chamfered to thereby form chambered portions CT, as shown in Fig. 5C. The chamfered portion CT is chamfered greatly beyond the inner circumferential surface of the main body layer 10 nearer toward the axis of the rod tube. That is, there is formed a joining guide portion G in which such chamfering reaches the chamfering supplement layer 42' forming the integral part. Therefore, the joining guide portion G is gradually reduced in diameter to a sufficient degree, so that the insertion side joining cylindrical portion I adjoining the joining guide portion G can be inserted into the receive side joining cylindrical portion very easily. The shape of the chamfered portion CT may be in an arc as shown in Fig. 5C or in a linear, tapered form.

In case where the above-mentioned chamfering working method is employed in forming the joining guide portion G, a joint type fishing rod capable of quick insertion can be produced easily and at low costs. In Fig. 5A, the core metal 30 includes the truncated-conical portion 34. However, the manufacturing method described with reference to Figs. 5A to 5C can also be applied to a case in which the truncated-conical portion 34 is not provided and the main body portion 32 and small-diameter cylindrical portion 36 are connected together by means of a steep level difference or step.

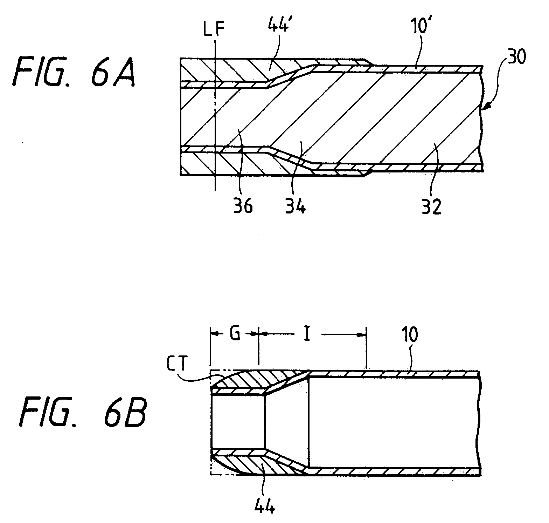

Next, with reference to Figs. 6A and 6B, description will be given below of another method of manufacturing a joint type fishing rod using the same core metal 30 as shown in Fig. 5A in a procedure partially different from the embodiment shown in Fig. 5. In the present method, as shown in Fig. 6A, at first, a prepreg is wound around the core metal 30 to thereby form a main body layer prepreg layer 10' which serves as the original of a main body layer 10 of the rod tube. In this case, similarly to the embodiment shown in Fig. 3, if slits are previously formed in the leading end portion of the prepreg, then the prepreg can be easily wound without producing any wrinkles on the truncated-conical portion 34.

Next, a chamfering supplement layer 44' is formed on the prepreg layer 10' wound around the small-diameter cylindrical portion 36. The chamfering supplement layer is formed of the same material that is used to form the previously described chamfering supplement layer 42'. Also, the thickness of the chamfering supplement layer 44' is almost equal to a level difference between the main body portion 32 and the small-diameter cylindrical portion 36, and at the same time a layer having a thickness corresponding to a working width is formed in the front portion of the prepreg layer 10' formed on the main body portion 32.

In this state, a tightening tape is wound around the thus formed rod tube blank, and the rod tube blank is then heated to thereby combine the prepreg layer 10' with the chamfering supplement layer 44' into an integral part. Next, after the tightening tape and core metal 30 are removed from the rod tube blank, the rod tube blank is cut along a line LF. Then, the working width layer of the rod tube blank is ground by centerless working to provide a given outside diameter with a desired accuracy to thereby form an insertion side joining cylindrical portion I. The leading end corner potions of the insertion side joining cylindrical portion I are chamfered to thereby form chamfered portions CT as shown in Fig. 6B. The chamfered portions C are chamfered from the chamfering supplement layer 44 to a position close to the main body layer 10 to thereby form joining guide portions G. Therefore, the joining guide portion G is gradually reduced in diameter to a sufficient extent, so that the insertion side joining cylindrical portion I disposed adjacent to the joining guide portion G can be inserted into the receive side joining cylindrical portion very easily.

As can be clearly understood from the foregoing description, according to the invention, due to the fact that the joining guide portion with the diameter thereof gradually reduced to a sufficient extent is formed in the front end portion of the insertion side joining cylindrical portion, the insertion side joining cylindrical portion can be inserted into the receive side joining cylindrical portion very easily. This makes it possible to provide a joint type fishing rod which allows two successive rod tubes to be easily inserted into each other and joined together in a very short time in competition even when the respective central axes of the two successive rod tubes are not aligned with each other to a considerable extent, and also which can provide a good operationability. This can also reduce greatly the possibility that the end face of the receive side rod tube is caused to split finely when the receive side rod tube collides with the insertion side rod tube.

Also, since the above-mentioned joining guide portion is formed continuously and integrally with the insertion side joining cylindrical portion of the rod tube, it is possible to provide a joint type fishing rod which is light, is highly strong, and has a good figure.

In the present fishing rod manufacture, the fishing rod is produced by forming slits in the fiber reinforced prepreg forming the joining guide portion, by winding a narrow-width tape round the joining guide portion, or by chamfering the joining guide portion and, therefore, there can be supplied a joint type fishing rod including highly accurate rod tubes in which no wrinkles can be produced. Especially, according to the manufacturing method employing the chamfering working, the joining guide portion can be formed easily and at low costs.

## Claims

1. A joint type fishing rod comprising, as a set, a plurality of rod tubes (S3,S4,S5,S6) wherein at least one of the rod tubes (S3,S4,S5,S6) is provided at its one end with an integral joining guide portion (G3,G4,G5,G6) the diameter of which is gradually decreased relative to the rest of the at least one rod tube (S3,S4,S5,S6) to facilitate and guide insertion into another rod tube; the joining guide portion (G3,G4,G5,G6) being simultaneously moulded with the at least one rod tube (S3,S4,S5,S6); characterised in that each rod tube (S3,S4,S5,S6) is formed by winding at least one prepreg formed of high-strength fibres impregnated with synthetic resins; each joining guide portion (G3,G4,G5,G6) is formed of at least one integral plastic layer (10); the integral joining guide portion of at least one larger overall diameter rod tube (S3,S4,S5,S6) is insertable into a receiving end (R2,R3,R4,R5) of a smaller overall diameter rod tube (S2,S3,S4,S5); and is retained entirely by an interference fit between the two rod tubes.

2. A joint type fishing rod according to claim 1, wherein the plastic layer (10) is laid entirely over the at least one rod tube from one axial end to the other.

3. A joint type fishing rod according to claim 1 or claim 2, wherein a reinforcing layer (12,14,22) is integrally formed on a portion of at least one of radially internal and external surfaces of the plastic layer (10) forming the joining guide portion.

4. A joint type fishing rod according to claim 3, wherein the reinforcing layer (12,14,22) is chamfered after being moulded.

5. A joint type fishing rod according to claim 3 or claim 4, wherein the reinforcing layer (12,14,22) contains more reinforcing fibres arranged in a circumferential direction with respect to the length of the at least one rod tube than in a longitudinal direction.

6. A joint type fishing rod according to any one of the preceding claims, wherein each of the rest of the rod tubes is also formed in the same way as the at least one rod tube.

7. A joint type fishing rod according to any one of the preceding claims, wherein, the plastic layer is chamfered after being moulded.

8. A method of manufacturing a rod tube (S3,S4,S5,S6) for use in a joint type fishing rod according to any one of the preceding claims, the method comprising the steps of providing a metal core (30) having a diameter-reduced portion (34,36) corresponding in location to the joint guide portion (G3,G4,G5,G6), and a main portion (32) for forming the rest of the rod tube (30); and winding a prepreg (10P,12P,14P,T1,10) around the metal core (30).

9. A method according to claim 8, wherein slits (S) are formed in the prepreg (10P,12P,14P) which are arranged to extend substantially axially along the metal core (30) and the prepreg (10P,12P,14P) is wound in such a manner that the slits (S) are substantially laid on the diameter-reduced portion (34).

10. A method according to claim 8, wherein the prepreg is in the form of a narrow-width tape (T1) which is spirally wound around the diameter-reduced portion (34) in such a manner that at least a part of the prepreg (T1) is located around the main portion (32).

11. A method according to claim 8, wherein a chamfering supplemental layer (42') is provided on one of radially internal and external surfaces of the prepreg (10) so as to substantially fill up a level difference between the main (32) and diameter-reduced (36) portions; combining the chamfering supplemental layer (42') with the prepreg (10) thus wound, to provide an integral part; and chamfering an end of the integral part to provide the joint guide portion (G3,G4,G5,G6).

## Patentansprüche

1. Zusammensetzbare Angelrute, umfassend, als Satz, eine Mehrzahl von Rutenrohren (S3, S4, S5, S6), wobei mindestens eines der Rutenrohre (S3, S4, S5, S6) an seinem einen Ende mit einem integralen Führungsabschnitt für das Zusammenfügen (G3, G4, G5, G6) versehen ist, dessen Durchmesser bezogen auf den Rest des mindestens einen Rutenrohres (S3, S4, S5, S6) allmählich reduziert ist, um das Einsetzen in ein anderes Rutenrohr zu erleichtern und zu führen; wobei der Führungsabschnitt für das Zusammenfügen (G3, G4, G5, G6) gleichzeitig mit dem mindestens einen Rutenrohr (S3, S4, S5, S6) geformt ist; dadurch gekennzeichnet, daß jedes Rutenrohr (S3, S4, S5, S6) durch Winden mindestens eines Prepregs, das von hochfesten Fasern, die mit synthetischen Harzen imprägniert sind, gebildet wird, gebildet ist; jeder Führungsabschnitt für das Zusammenfügen (G3, G4, G5, G6) von mindestens einer integralen Kunststoffschicht (10) gebildet wird; der integrale Führungsabschnitt für das Zusammenfügen von mindestens einem Rutenrohr (S3, S4, S5, S6) mit größerem Gesamtdurchmesser in ein Aufnahmeende (R2, R3, R4, R5) eines Rutenrohrs (S2, S3, S4, S5) mit kleinerem Gesamtdurchmesser einsetzbar ist; und durch Preßsitz zwischen den beiden Rutenrohren vollständig zurückgehalten wird.

2. Zusammensetzbare Angelrute nach Anspruch 1, in welcher die Kunststoffschicht (10) von einem axialen Ende zum anderen vollständig über das mindestens eine Rutenrohr gelegt ist.

3. Zusammensetzbare Angelrute nach Anspruch 1 oder Anspruch 2, in welcher eine verstärkende Schicht (12, 14, 22) integral auf einem Abschnitt mindestens einer der radial inneren und äußeren Oberflächen der Kunststoffschicht (10), die den Führungsabschnitt für das Zusammenfügen bildet, gebildet ist.

4. Zusammensetzbare Angelrute nach Anspruch 3, in welcher die verstärkende Schicht (12, 14, 22) nach der Formgebung abgeschrägt wird.

5. Zusammensetzbare Angelrute nach Anspruch 3 oder Anspruch 4, in welcher die verstärkende Schicht (12, 14, 22) mehr in Umfangsrichtung bezüglich der Länge des mindestens einen Rutenrohres angeordnete verstärkende Fasern als in einer Längsrichtung enthält.

6. Zusammensetzbare Angelrute nach irgendeinem der vorangehenden Ansprüche, in welcher der Rest der Rutenrohre jeweils ebenfalls auf dieselbe Weise wie das mindestens eine Rutenrohr gebildet ist.

7. Zusammensetzbare Angelrute nach irgendeinem der vorangehenden Ansprüche, in welcher die Kunststoffschicht nach der Formgebung abgeschrägt wird.

8. Verfahren zur Herstellung eines Rutenrohrs (S3, S4, S5, S6) für die Verwendung in einer zusammensetzbaren Angelrute nach irgendeinem der vorangehenden Ansprüche, umfassend die Stufen der Bereitstellung eines Metallkerns (30) mit einem im Durchmesser verminderten Abschnitt (34, 36), der hinsichtlich seiner Position dem Führungsabschnitt für das Zusammenfügen (G3, G4, G5, G6) entspricht, und eines Hauptabschnitts (32) für die Bildung des Rests des Rutenrohres (30); und des Windens eines Prepregs (10P, 12P, 14P, T1, 10) um den Metallkern (30).

9. Verfahren nach Anspruch 8, in welchem Schlitze (S) in dem Prepreg (10P, 12P, 14P) gebildet sind, die so angeordnet sind, daß sie sich im wesentlichen axial entlang des Metallkerns (30) erstrecken, und das Prepreg (10P, 12P, 14P) auf solche Weise gewunden ist, daß die Schlitze (S) im wesentlichen auf den im Durchmesser reduzierten Abschnitt (34) gelegt werden.

10. Verfahren nach Anspruch 8, in welchem das Prepreg in Form eines schmalen Bandes (T1) vorliegt, welches auf solche Weise spiralförmig um den im Durchmesser verminderten Abschnitt (34) gewunden wird, daß sich mindestens ein Teil des Prepregs (T1) um den Hauptabschnitt (32) herum befindet.

11. Verfahren nach Anspruch 8, in welchem eine ergänzende Abschrägungsschicht (42') auf einer der radial inneren und äußeren Oberflächen des Prepregs (10) so vorgesehen wird, daß eine Niveaudifferenz zwischen dem Hauptabschnitt (32) und dem im Durchmesser verminderten Abschnitt (36) im wesentlichen aufgefüllt wird; die ergänzende Abschrägungsschicht (42') mit dem so gewundenen Prepreg (10) vereinigt wird, um einen integralen Teil bereitzustellen; und ein Ende des integralen Teils unter Bereitstellung des Führungsabschnitts für das Zusammenfügen (G3, G4, G5, G6) abgeschrägt wird.

## Revendications

1. Canne à pêche de type à jonction comprenant sous la forme d'un jeu une pluralité de tubes de canne (S3, S4, S5, S6), dans laquelle au moins l'un des tubes de canne est pourvu à sa première extrémité d'une partie de guidage de jonction (G3, G4, G5, G6) monobloc dont le diamètre est graduellement par rapport au restant du au moins un tube de canne (S3, S4, S5, S6), pour faciliter et guider l'insertion dans un autre tube de canne; la partie de guidage de jonction (G3, G4, G5, G6) étant simultanément moulée avec le au moins un tube de canne (S3, S4, S5, S6); caractérisée en ce que chaque tube de canne (S3, S4, S5, S6) est formé par enroulement d'au moins un pré-imprégné constitué de fibres à résistance élevée imprégnées avec des résines synthétiques; chaque partie de guidage de jonction (G3, G4, G5, G6) est constituée d'au moins une couche de matière plastique (10) monobloc, la partie de guidage de jonction monobloc, du au moins un tube de canne à plus grand diamètre global (S3, S4, S5, S6), est susceptible d'être insérée dans une extrémité de logement (R2, R3, R4, R5) d'un tube de canne à plus faible diamètre global (S2, S3, S4, S5); et est maintenue entièrement par une installation avec interférence entre les deux tubes de canne.

2. Une canne à pêche de type à jonction selon la revendication 1, dans laquelle la couche de matière plastique (10) est posée entièrement sur le au moins un tube de canne depuis une extrémité axiale vers l'autre.

3. Une canne à pêche de type à jonction selon la revendication 1 ou la revendication 2, dans laquelle une couche de renforcement (12, 14, 22) est formée d'un seul tenant sur une partie d'au moins l'une des surfaces radialement intérieure et extérieure de la couche de matière plastique (10) formant la partie de guidage de jonction.

4. Une canne à pêche de type à jonction selon la revendication 3, dans laquelle la couche de renforcement (12, 14, 22) est biseautée après avoir été moulée.

5. Une canne à pêche de type à jonction selon la revendication 3 ou la revendication 4, dans laquelle la couche de renforcement (12, 14, 22) contient plus de libres de renforcement, agencées dans une direction circonférentielle par rapport à la longueur du au moins un tube de canne, que dans une direction longitudinale.

6. Une canne à pêche de type à jonction selon l'une quelconque des revendications précédentes, dans laquelle chacun du restant des tubes de canne est également formé de la même manière que le au moins un tube de canne.

7. Une canne à pêche de type à jonction selon l'une quelconque des revendications précédentes, dans laquelle la couche de matière plastique est biseautée après avoir été moulée.

8. Un procédé de fabrication d'un tube de canne (S3, S4, S5, S6) destiné à être utilisé dans une canne à pêche de type à jonction selon l'une quelconque des revendications précédentes, le procédé comprenant les étapes d'agencement d'un noyau métallique (30) ayant une partie à diamètre réduit (34, 36), dont l'emplacement correspond à la partie de guidage de jonction (G3, G4, G5, G6), et une partie principale (32) pour former le restant du tube de canne (30); et d'enroulement d'un pré-imprégné (10P, 12P, 14P, T1, 10) autour du noyau métallique (30).

9. Un procédé selon la revendication 8, dans lequel sont formées dans le pré-imprégné (10P, 12P, 14P) des fentes (S) qui sont agencées de façon à s'étendre sensiblement axialement le long du noyau métallique (30), et le pré-imprégné (10P, 12P, 14P) est enroulé de manière que les fentes (S) soient sensiblement disposées sur la partie à diamètre réduit (34).

10. Un procédé selon la revendication 8, dans lequel le pré-imprégné se présente sous la forme d'une bande à largeur étroite (T1) qui est enroulée en spirale autour de la partie à diamètre réduit (34), de manière qu'au moins une partie du pré-imprégné (T1) soit placée autour de la partie principale (32).

11. Un procédé selon la revendication 8, dans lequel une couche supplémentaire biseautée (42') est prévue sur l'une des surfaces radialement intérieure et extérieure du pré-imprégné (10), de manière à combler sensiblement une différence de niveau entre les parties principale (32) et à diamètre réduit (36), en combinant la couche supplémentaire biseautée (42') avec le pré-imprégné (10) ainsi enroulé, pour fournir une partie monobloc; et en biseautant une extrémité de la partie monobloc pour fournir la partie de guidage de jonction (G3, G4, G5, G6).
